# EUROPÄISCHE PATENTSCHRIFT

(11) **EP 1 775 824 B1**
(45) Veröffentlichungstag und Bekanntmachung des Hinweises auf die Patenterteilung: **13.02.2013**
(21) Anmeldenummer: 06121358.3
(22) Anmeldetag: 27.09.2006
(51) Int. Cl.: H02K 5/173, H02K 9/22

(54) **Generator für ein Triebwerk**
Alternator for an engine
Générateur pour un moteur

(30) Priorität: 17.10.2005 DE 102005049879
(43) Veröffentlichungstag der Anmeldung: 18.04.2007
(73) Patentinhaber: Rolls-Royce Deutschland Ltd & Co KG, 15827 Blankenfelde-Mahlow (DE)
(72) Erfinder: van der Woude, Matthijs, 15834, Rangsdorf (DE)
(74) Vertreter: Müller, Wolfram Hubertus

(56) Entgegenhaltungen:
- WO-A-88/06371
- JP-A- 8 019 215
- US-A- 2 794 930

## Beschreibung

Die Erfindung bezieht sich auf einen Generator mit einem Generatorgehäuse und einem angeflanschten Getriebegehäuse für ein Triebwerk.

Ein Generator dieser Art ist aus JP 08 019215 A bekannt. Besagte Druckschrift offenbart einen Generator für ein Triebwerk, bestehend aus einem Generatorgehäuse und einem angeflanschten Getriebegehäuse mit im Generatorgehäuse angeordnetem Stator und einem an einer Rotorwelle angebrachten Rotor sowie einer an das Getriebegehäuse angeflanschten Abdeckplatte mit in diese eingebundenem Lager für die Rotorwelle, wobei die Abdeckplatte einen nur mit dem Getriebegehäuse lösbar verbundenen Lagerhaltering aus einem steifen, hochfesten Material zur Aufnahme des Lagers umfasst und wobei an den Lagerhaltering ein Zentrierzylinder angeformt ist, an dem das Generatorgehäuse an einer Umfangsfläche zentrisch zum Lager der Rotorwelle fixiert ist. Dieser Generator bereitet jedoch Probleme, da der Generator aufgrund seiner vom Rotor und vom Stator erzeugten erheblichen Wärmemenge in der Funktionsfähigkeit beeinträchtigt ist und damit dessen Lebensdauer deutlich verkürzt wird.

Es ist bereits versucht worden, dieses Problem durch eine bessere Abführung der Wärme vom Generatorgehäuse über die Abdeckplatte des Generatorgehäuses auf das Getriebegehäuse zu lösen, und zwar indem die Abdeckplatte aus einem Material mit hoher Wärmeleitfähigkeit, z. B. einer Aluminiumlegierung, gefertigt wird, so dass die Wärme von dem ebenfalls aus einer Aluminiumlegierung bestehenden Generatorgehäuse über die Abdeckplatte in das Getriebegehäuse abgeleitet werden kann. Die Rotorwelle ist üblicherweise in einem in die Abdeckplatte integrierten Stahlkugellager abgestützt. Die Ausbildung der Abdeckplatte aus zwei Werkstoffen mit unterschiedlicher Wärmeleitfähigkeit hat jedoch den Nachteil, dass aufgrund der unterschiedlichen Wärmedehnung eine feste Einbindung des Stahllagers des Rotorschaftes in die Aluminiumabdeckplatte nicht ausreichend ist. Da die Abdeckplatte aus Aluminium außerdem wegen der vergleichsweise geringen Steifigkeit nicht den dynamischen Anforderungen an hohen Rotordrehzahlen und eines dauerhaft stabilen Lagersitzes in der Abdeckplatte genügt, ist eine lange Lebensdauer der Lagerung des Rotorschaftes in dieser Anwendung nicht gegeben und in der Abdeckplatte ein Einsatz aus einem hochfesten, steifen Material, zum Beispiel Titanlegierung, erforderlich. Durch ein vergrößertes Spiel zwischen Lagerschale und Gehäuse kommt es zu Verkantungen und Vibrationen und schließlich zu einer dadurch bedingten Beschädigung des Lagers und schließlich des Stators und des Rotors.

Ein Vorschlag, die Abdeckplatte als Ganzes aus einem hochfesten Material, wie zum Beispiel Stahl oder Titan, zu fertigen, hat die obengenannte Problematik gelöst und stellt heute den Stand der Technik dar, was allerdings durch die anfangs genannte vergleichsweise schlechte Wärmeleitfähigkeit zu überhöhten Betriebstemperaturen des Stators des Generator führt, mit als Folge erhöhten Ausfallraten der Generatoren. Die Lösung, dabei die Abdeckplatte zur Erzielung einer möglichst großen Wärmeübertragungsfläche großvolumig auszubilden, scheitert an der dadurch bedingten Vergrößerung des Volumens und der gerade bei Flugtriebwerken verständlicherweise nicht erwünschten Gewichtsvergrößerung. Auch die Ausbildung von Kühlrippen am Generatorgehäuse, die zwar im Normalbetrieb eine exzellente Alternative zur Wärmeabfuhr darstellt, scheitert als Lösung, da im möglichen Brandfall umgekehrt ein größerer Wärmeeintrag bei unverändert schlechten Wärmeleitbedingungen zum Getriebe zu verfrühtem Versagen des Generators führt, was der fünfminütigen Funktionsanforderung im Brandfall zur elektrischen Versorgung der elektronischen Regeleinheit und der Überdrehsicherungseinheit zum sicheren Abschalten des Triebwerks im Wege steht.

Der Erfindung liegt die Aufgabe zugrunde, den an das Getriebegehäuse eines Triebwerks angeflanschten Generator so auszubilden, dass einerseits eine exakte zentrische Lagerung der Rotorwelle und eine genaue Positionierung des Rotors zum Stator gewährleistet sind und andererseits eine möglichst große Wärmemenge vom Statorgehäuse abgeführt wird, um letztlich eine lange Lebensdauer des Generators zu erzielen.

Diese Aufgabe wird erfindungsgemäß mit den Merkmalen des Anspruchs 1 gelöst. Vorteilhafte Weiterbildungen der Erfindung und diese zweckmäßig ausgestaltende Merkmale sind Gegenstand der Unteransprüche.

Hervorzuheben ist die zweiteilige Ausbildung der das Generatorgehäuse verschließenden, am Getriebegehäuse angeflanschten Abdeckplatte, die aus einem nur mit dem Getriebegehäuse verschraubten Lagerhaltering aus einem hochfesten, steifen Material und einem sowohl mit dem _{G}e-triebegehäuse als auch mit dem Generatorgehäuse verbundenen separaten Wärmeleitring aus einem hochwärmeleitenden Material besteht. Durch die separate Wärmeabführung unmittelbar zum Getriebegehäuse und die separate Lagerung der Rotorwelle in einem nur mit dem Getriebegehäuse verbundenen separaten Lagerhaltering aus einem die Wärme schlecht leitenden, steifen Material ist eine funktionssichere, von durch Wärmewirkung verursachten Bewegungen unabhängige zentrische Lagerung der Rotorwelle und damit des Rotors im Stator gewährleistet und ein, von Überhitzungen des Stators freier Betrieb des Generators möglich, so dass letztlich eine lange Lebensdauer erreicht werden kann.

Der Lagerhaltering ist über Befestigungsösen mit dem Getriebegehäuse verschraubt. Da der Wärmeleitring den Lagerhaltering relativ eng umschließt und das Getriebegehäuse kontaktiert, sind an seinem zum Getriebegehäuse weisenden Rand Ausnehmungen eingeformt, die von den Befestigungsösen durchgriffen werden.

Dadurch ergibt sich die Möglichkeit, die bereits vorhandenen Bauteile wie den Lagerhaltering soweit nachzuarbeiten bzw. den bestehenden Stator ungeändert weiter zu nutzen, was eine Aufwandverminderung zur optimierten Generatoranbindung an das Getriebegehäuse ermöglicht.

Weiterhin ist an dem Lagerhaltering ein zum Generator gerichteter Zentrierzylinder angeformt, der über einen Dichtring an einer Umfangsfläche des Generatorgehäuses anliegt und damit eine exakte Zentrierung des Rotors zum Stator bewirkt. Die rein radiale Abdichtung ist weniger empfindlich in Bezug auf unterschiedliche Bauteilhöhen von Lagerhaltering und Wärmeleitring, was gröbere Fertigungstoleranzen bei der Höhe des Wärmeleitringes und des Lagerhalteringes zulässt.

Zur Gewährleistung der Dichtigkeit und zur lagerichtigen axialen Positionierung des Zentrierzylinders zum Generatorgehäuse oder des Rotors zum Stator kann der Lagerhaltering über einen Abstandshaltering mit dem Getriebegehäuse verbunden sein. Es sind Abstandshalteringe in unterschiedlichen Stärken vorgesehen, die eine ausreichende Einstellgenauigkeit garantieren.

Gemäß einem bevorzugten Merkmal der Erfindung ist der Rotor auf der Stirnseite einer die Rotorwelle umschliessenden Hülse abgestützt, und zwar vorzugsweise über einen in unterschiedlichen Stärken vorliegenden Abstandseinstellring, so dass auch auf diese Weise eine exakte axiale Positionierung des Rotors zum Stator gewährleistet ist.

In weiterer Ausgestaltung der Erfindung kann der Wärmeleitring mit dem Lagerhaltering durch eine Passung verbunden sein.

Aus WO 88/06371 A1 ist zwar bereits ein Wärmeleitring zwischen dem Getriebegehäuse und dem Zylinderblock eines Verbrennungsmotors bekannt. Hierbei handelt es sich aber nicht um einen Generator mit einem Generatorgehäuse und einem angeflanschten Getriebegehäuse für ein Triebwerk.

Die Erfindung ist nachfolgend an Hand einer Ausführungsform eines Generators mit einem Generatorgehäuse und einem angeflanschten Getriebegehäuse für ein Triebwerk näher erläutert. Es zeigt:
- Fig. 1: einen axialen Längsschnitt durch den Generator,
- Fig. 2: die Einzelheit "Z" aus Fig. 1,
- Fig. 3: einen Querschnitt gemäß der Linie III-III in Fig. 1 durch die zweiteilige Abdeckplatte mit den jeweiligen Montagelaschen zur Befestigung am Getriebegehäuse,
- Fig. 4: einen Querschnitt entsprechend Fig. 3, jedoch mit einer eigenen Befestigungslasche des Wärmeleitringes der Abdeckplatte,
- Fig. 5: einen axialen Längsschnitt durch eine zweite, abgewandelte Ausführungsform des Generators und
- Fig. 6: einen axialen Längsschnitt durch eine dritte, abgewandelte Ausführungsform des Generators.

Der dargestellte Permanentmagnet-Generator besteht aus einem Generatorgehäuse 1 mit einem an dessen Innenwand installierten, Induktionsspulen 2 umfassenden Stator 3 sowie aus einem mit Permanentmagneten 7 bestückten Rotor 4, der auf einer Rotorwelle 5 mittels einer Befestigungsmutter 6 gehalten ist. An der Rotorwelle 5 ist eine Öl-schleuderscheibe 9 über eine mit dieser verbundenen Hülse 8 angebracht. An der in das Generatorgehäuse 1 weisenden Stirnseite der Hülse 8 ist der Rotor 4 axial abgestützt. Die stirnseitige Abstützung des Rotors 4 an der Hülse 8 erfolgt über einen in einer bestimmten Stärke ausgeführten ersten Abstandseinstellring 10. Es stehen Abstandseinstellringe 10 in verschiedenen Stärken zur Verfügung, so dass in axialer Richtung eine exakte Positionierung des Rotors 4 zum Stator 3 erfolgen kann.

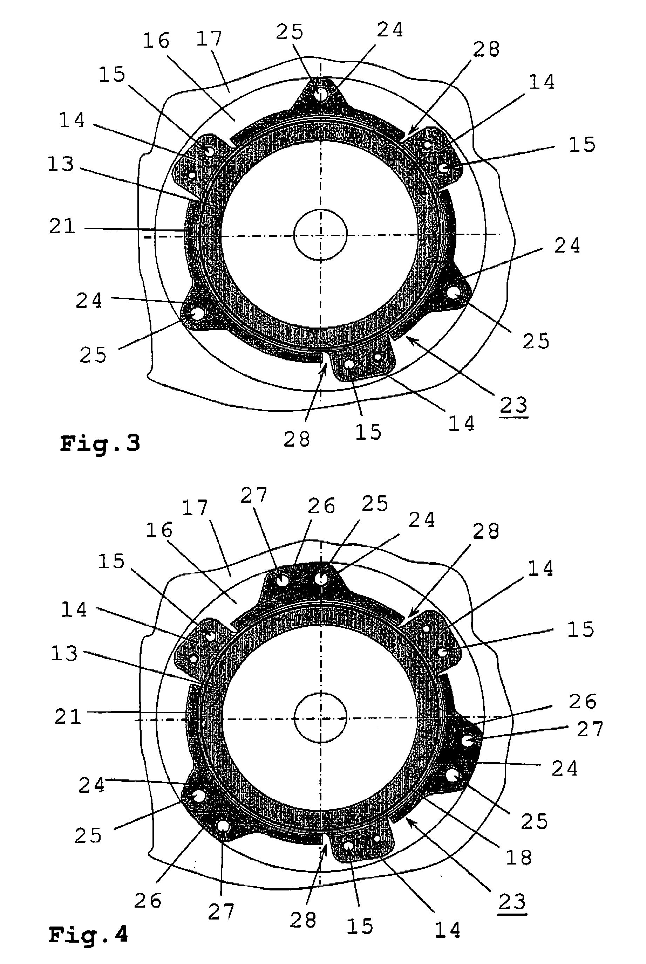

Zur Lagerung der Rotorwelle 5 ist ein Wälzlager 11 vorgesehen, dessen äußere Lagerschale 12 an einem Lagerhaltering 13 aus einer Titanlegierung, das heißt einem steifen, aber schlecht wärmeleitenden Material, befestigt ist. Der Lagerhaltering 13 weist Befestigungsösen 14 mit Bohrungen 15 auf, um den Lagerhaltering 13 mit einem Getriebegehäuseflansch 16 des Getriebegehäuses 17 mittels Schraubenbolzen (nicht dargestellt) fest verbinden zu können(Fig. 3 und 4).

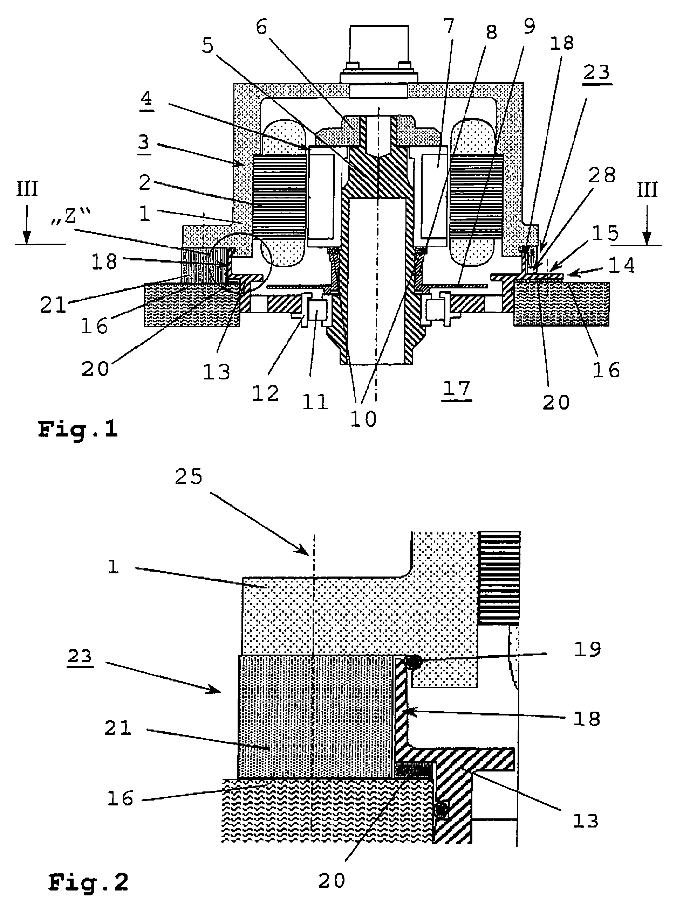

An den Lagerhaltering 13 ist ein sich axial zum Stator 3 hin erstreckender Zentrierzylinder 18 angeformt, an dessen Innenfläche über einen Dichtring 19 eine Umfangsfläche des zylindrischen Generatorgehäuses 1 gehalten ist (Fig. 1, 2, 5 und 6), um nach der Montage eine exakt zentrische Lage des Rotors 4 zum Stator 3 und damit eine gleichmäßige Spaltweite einzustellen und letztlich eine präzise Funktion und eine lange Lebensdauer des Generators zu bewirken. Die Stirnseite oder Seitenfläche des Zentrierzylinders 18 kontaktiert nicht das Generatorgehäuse 1. Der stirnseitige Abstand des Zentrierzylinders 18 zum Generatorgehäuse 1 wird mit einem in der jeweils gewünschten Stärke dimensionierten zweiten Abstandshaltering 20 (Fig. 1, 2 und 7) eingestellt, um die lagerichtige Anordnung des Dichtringes 19 zwischen Zentrierzylinder 18 und Generatorgehäuse 1 zu gewährleisten.

Der Zentrierzylinder 18 des Lagerhalteringes 13 ist an der Außenumfangsfläche von einem Wärmeleitring 21 aus einem gut wärmeleitenden Material, hier eine Aluminiumlegierung, umgeben. Der Wärmeleitring 21 kontaktiert sowohl das Generatorgehäuse 1 als auch den Getriebegehäuseflansch 16 des Getriebegehäuses 17, so dass die Wärme des Generatorgehäuses 1 zum Getriebegehäuse 17 abgeleitet werden kann und mithin ein störungsfreier Betrieb und eine lange Lebensdauer des Permanentmagnet-Generators gewährleistet sind. Die Befestigung des Wärmeleitringes 21 zwischen Generatorgehäuse 1 und Getriebegehäuse 17 erfolgt über am Wärmeleitring 21 angeformte Montagelaschen 24 und entsprechende erste Montagebohrungen 25 (Fig. 3). Am Wärmeleitring 21 können noch Befestigungslaschen 26 mit zweiten Montagebohrungen 27 angeformt sein (Fig. 4), um den Wärmeleitring 21 zusätzlich und unabhängig vom Generatorgehäuse 1 am Getriebegehäuse 17 befestigen zu können. Dadurch soll verhindert werden, dass der Wärmeleitring 21 bei der Demontage versehentlich herunterfallen kann. An dem zum Getriebegehäuse 17 weisenden unteren Rand des Wärmeleitringes 21 befinden sich Ausnehmungen 28 für die Befestigungsösen 14 des unabhängig vom Wärmeleitring 21 am Getriebegehäuse 17 bzw. Getriebegehäuseflansch 16 befestigten Lagerhalterings 13. Der Lagerhaltering 13 mit Zentrierzylinder 18 und der Wärmeleitring 21 bilden somit eine gemeinsame, zweiteilige Abdeckplatte 23, die zwischen Generatorgehäuse 1 und Getriebegehäuse 17 befestigt ist und einerseits für eine gute wärmeabführung vom Generatorgehäuse 1 zum Getriebegehäuse 17 sowie für die dynamisch stabile Lagerung im aus steiferem Material ausgeführten Lagerhaltering 13 und für eine zentrisch und axial exakte Positionierung des Rotors 4 zum Stator 3 sorgt. Der Wärmeleitring 21 und der Lagerhaltering 13 mit Zentrierzylinder 18 sind jedoch unabhängig voneinander mit dem Getriebegehäuse 17 verbunden. Die Position und Ausrichtung des Lagerhalterings 13 und damit des Rotors 4 zum Stator 3 wird durch das unterschiedliche Dehnungsverhalten von Wärmeleitring 21 und Lagerhaltering 13 nicht beeinflusst, da die beidseitig radial gelagerte Rotorwelle 5 durch die magnetfelderzeugte Zwischenwirkung zwischen Stator 3 und Rotor 4 axial geführt ist und geringe Relativverschiebungen beider Bauteile axial ausgleichen kann.

Der Lagerhaltering 13 und der Wärmeleitring 21 sind zwei getrennte, mit Spiel aneinander liegende Bauteile, die über die Spielpassung unabhängig voneinander mit dem Getriebegehäuse 17 verbunden sind.

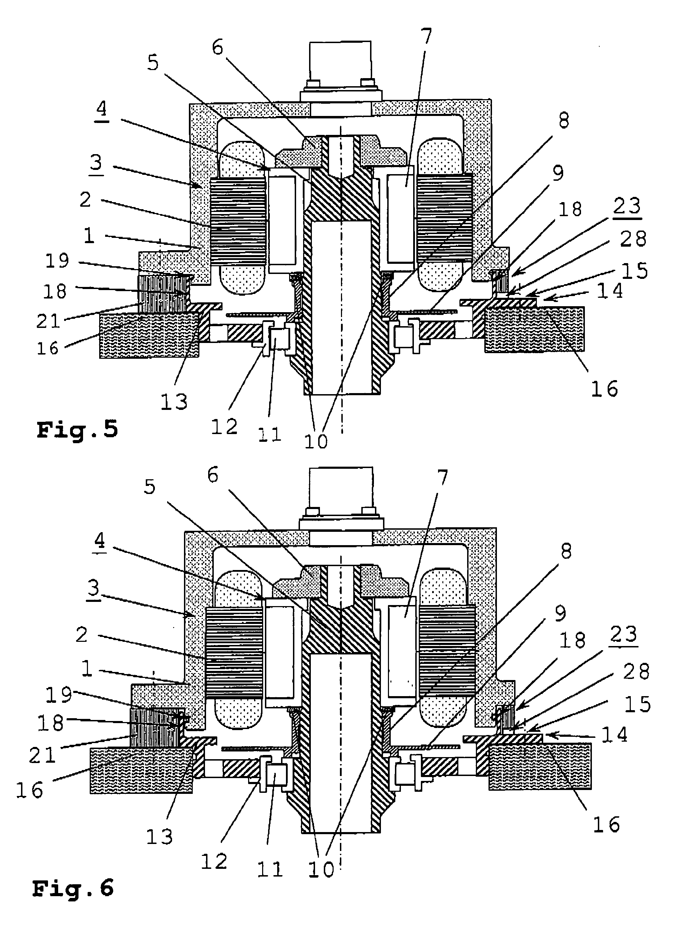

Es ist aber auch möglich, dass - wie die zweite Ausführungsform nach Fig. 5 zeigt - der Lagerhaltering 13 und der Wärmeleitring 21 über eine Presspassung miteinander verbunden und ineinandergefügt sind. Da durch die Presspassung die Lage des Lagerhalteringes 13 zum Wärmeleitring 21 festgelegt ist, kann in diesem Fall auf den Abstandhaltering 20, mit dem die stirnseitige Lage des Zentrierzylinders 18 bzw. der Dichtring 19 eingestellt werden muss, verzichtet werden.

Auf den Abstandshaltering 20 kann auch dann verzichtet werden, wenn der Dichtring 19 - anders als in Fig. 1 und 5 - so angeordnet ist, dass - wie die dritte Ausführungsform nach Fig. 6 zeigt - eine radiale Dichtung zwischen Zentrierzylinder 18 und einer Innenumfangsfläche des Generatorgehäuses 1 gebildet wird. In diesem Fall kommt es auf die genaue axiale Positionierung des Zentrierzylinders 18 nicht an, da die exakte Axialposition des Rotors zum Stator schon mit dem ersten Abstandhaltering 10 eingestellt werden kann.

### Bezugszeichenliste

- 1: Generatorgehäuse
- 2: Induktionsspule
- 3: Stator
- 4: Rotor
- 5: Rotorwelle
- 6: Befestigungsmutter
- 7: Permanentmagnet
- 8: Hülse
- 9: Ölschleuderscheibe
- 10: Abstandseinstellring
- 11: Wälzlager
- 12: äußere Lagerschale
- 13: Lagerhaltering
- 14: Befestigungsöse
- 15: Bohrung
- 16: Getriebegehäuseflansch
- 17: Getriebegehäuse
- 18: Zentrierzylinder
- 19: Dichtring
- 20: Abstandshaltering
- 21: Wärmeleitring
- 22: Ausnehmung
- 23: Abdeckplatte
- 24: Montagelasche
- 25: Montagebohrung
- 26: Befestigungslasche
- 27: Montagebohrung
- 28: Ausnehmung

## Patentansprüche

1. Generator für ein Triebwerk, bestehend aus einem Generatorgehäuse (1) und einem angeflanschten Getriebegehäuse (17) mit im Generatorgehäuse (1) angeordnetem Stator (3) und einem an einer Rotorwelle (5) angebrachten Rotor (4) sowie einer an das Getriebegehäuse (17) angeflanschten Abdeckplatte (23) mit in diese eingebundenem Lager (11) für die Rotorwelle (5), wobei die Abdeckplatte (23) einen nur mit dem Getriebegehäuse (17) lösbar verbundenen Lagerhaltering (13) aus einem steifen, hochfesten Material zur Aufnahme des Lagers (11) und einen das Getriebegehäuse (17) und das Generatorgehäuse (1) verbindenden separaten Wärmeleitring (21) aus einem hochwärmeleitenden Material umfasst, wobei an den Lagerhaltering (13) ein Zentrierzylinder (18) angeformt ist, an dem das Generatorgehäuse (1) an einer Umfangsfläche über einen Dichtring (19) zentrisch zum Lager (11) der Rotorwelle (5) fixiert ist, wobei der Wärmeleitring (21) den Zentrierzylinder (18) umschließt, wobei an der am Getriebegehäuse (17) liegenden Stirnseite des Wärmeleitringes (21) Ausnehmungen (28) vorgesehen sind, durch die am Lagerhaltering (13) angeformte, zu dessen Befestigung am Getriebegehäuse (17) vorgesehene Befestigungsösen (14) hindurch greifen.

2. Generator nach Anspruch 1, **dadurch gekennzeichnet, dass** zwischen Lagerhaltering (13) und Getriebegehäuse (17) ein Abstandshaltering (20) zur lagerichtigen axialen Positionierung des zentrierzylinders (18) und des Dichtrings (19) zum Generatorgehäuse (1) oder des Rotors (3) zum Stator (4) angeordnet ist, wobei Abstandshalteringe (20) in unterschiedlicher Stärke vorgesehen sind.

3. Generator nach Anspruch 1, **dadurch gekennzeichnet, dass** die Rotorwelle (5) über eine Hülse (8) mit einer Ölschleuderscheibe (9) verbunden ist und der Rotor (4) zur axialen Positionierung zum Stator (3) über einen Abstandseinstellring (10) auf der Stirnseite der Hülse (8) abgestützt ist, wobei Abstandseinstellringe (10) in unterschiedlicher Stärke vorgesehen sind.

4. Generator nach Anspruch 1, **dadurch gekennzeichnet, dass** der separate Wärmeleitring (21) über eine Passung mit der Außenumfangsfläche des Zentrierzylinders (18) verbunden ist.

5. Generator nach Anspruch 1, **dadurch gekennzeichnet, dass** zur Herstellung der Verbindung zwischen dem Generatorgehäuse (1) und dem Getriebegehäuse (17) am Außenumfang des Wärmeleitringes (21) Montagelaschen (24) angeformt sind.

6. Generator nach Anspruch 5, **dadurch gekennzeichnet, dass** am Außenumfang des Wärmeleitringes (21) Befestigungslaschen (26) zur zusätzlichen Verbindung des Wärmeleitringes (21) nur mit dem Getriebegehäuse (17) angeformt sind.

## Claims

1. Generator for an engine, including a generator casing (1) and a flange-mounted gearbox casing (17) with a stator (3) arranged inside the generator casing (1) and a rotor (4) attached to a rotor shaft (5) as well as a cover plate (23) flange-mounted to the gearbox casing (17) with a bearing (11) incorporated therein for the rotor shaft (5), with the cover plate (23) comprising a bearing retainer ring (13) detachably connected only to the gearbox casing (17) and made of a stiff, high-strength material for mounting of the bearing (11), and a separate heat-conducting ring (21) made of a highly thermally conducting material and connecting the gearbox casing (17) and the generator casing (1), with a centering cylinder (18) being formed on the bearing retainer ring (13), to which centering cylinder the generator casing (1) is fixed centrically to the bearing (11) of the rotor shaft (5) on a circumferential surface using a sealing ring (19), with the heat-conducting ring (21) enclosing the centering cylinder (18), with recesses (28) being provided on the front face of the heat-conducting ring (21) contacting the gearbox casing (17), through which the fastening lugs (14) formed on the bearing retainer ring (13) reach for fastening it to the gearbox casing (17).

2. Generator in accordance with Claim 1, **characterized in that** a spacer ring (20) is arranged between bearing retainer ring (13) and gearbox casing (17) for correct axial positioning of the centering cylinder (18) and of the sealing ring (19) relative to the generator casing (1), or of the rotor (3) relative to the stator (4), with spacer rings (20) being provided in differing thicknesses.

3. Generator in accordance with Claim 1, **characterized in that** the rotor shaft (5) is connected via a sleeve (8) to an oil slinger disk (9) and the rotor (4) is supported by a distance adjusting ring (10) on the front face of the sleeve (8) for axial positioning relative to the stator (3), with distance adjusting rings (10) being provided in differing thicknesses.

4. Generator in accordance with Claim 1, **characterized in that** the separate heat-conducting ring (21) is connected to the outer circumferential surface of the centering cylinder (18) by a fit.

5. Generator in accordance with Claim 1, **characterized in that** mounting brackets (24) are formed on the outer circumference of the heat-conducting ring (21) for making the connection between the generator casing (1) and the gearbox casing (17).

6. Generator in accordance with Claim 5, **characterized in that** fastening brackets (26) are formed on the outer circumference of the heat-conducting ring (21) for additional connection of the heat-conducting ring (21) only to the gearbox casing (17).

## Revendications

1. Générateur pour un moteur, constitué d'un carter de générateur (1) et d'un carter de transmission (17) fixé par bride, avec un stator (3) placé dans le carter de générateur (1) et un rotor (4) monté sur un arbre de rotor (5) ainsi qu'une plaque de recouvrement (23) fixée par bride au carter de transmission (17) avec un palier (11) intégré dans celle-ci pour l'arbre de rotor (5), sachant que la plaque de recouvrement (23) comprend une bague de maintien de palier (13) reliée de manière détachable uniquement au carter de transmission (17) et constituée d'un matériau inflexible à haute résistance pour loger le palier (11), et une bague thermoconductrice distincte (21) reliant le carter de transmission (17) et le carter de générateur (1) et constituée d'un matériau hautement thermoconducteur, que sur la bague de maintien de palier (13) est formé un cylindre de centrage (18) auquel le carter de générateur (1) est fixé sur une surface périphérique de manière centrée par rapport au palier (11) de l'arbre de rotor (5) au moyen d'une bague d'étanchéité (19), que la bague thermoconductrice (21) entoure le cylindre de centrage (18), que sur la face frontale de la bague thermoconductrice (21) située contre le carter de transmission (17) sont prévus des exclusions (28) à travers lesquels s'engagent des oeillets de fixation (14) formés sur la bague de maintien de palier (13) et prévus pour sa fixation au carter de transmission (17).

2. Générateur selon la revendication n° 1, **caractérisé en ce qu'**entre la bague de maintien de palier (13) et le carter de transmission (17) est placé un bague d' entretoise (20) pour assurer un positionnement axial correct du cylindre de centrage (18) et de la bague d'étanchéité (19) par rapport au carter de générateur (1) ou du rotor (3) par rapport au stator (4), les bagues d' entretoises (20) étant prévus en différentes épaisseurs.

3. Générateur selon la revendication n° 1, **caractérisé en ce que** l'arbre de rotor (5) est relié à un disque centrifugeur d'huile (9) par l'intermédiaire d'un manchon (8), et que pour le positionnement axial par rapport au stator (3), le rotor (4) s'appuie sur la face frontale du manchon (8) par l'intermédiaire d'une bague d' ajustement de distance (10), les bagues d' ajustement de distance (10) étant prévues en différentes épaisseurs.

4. Générateur selon la revendication n° 1, **caractérisé en ce que** la bague thermoconductrice distincte (21) est reliée a la surface circonférentielle extérieur du cylindre de centrage (18) par un ajustement.

5. Générateur selon la revendication n° 1, **caractérisé en ce que** pour établir la liaison entre le carter de générateur (1) et le carter de transmission (17), des pattes de montage (24) sont formées sur le pourtour extérieur de la bague thermoconductrice (21).

6. Générateur selon la revendication n° 5, **caractérisé en ce que** sur le pourtour extérieur de la bague thermoconductrice (21) sont formées des pattes de fixation (26) pour une liaison supplémentaire de la bague thermoconductrice (21) avec uniquement le carter de transmission (17).
